(19) Europäisches Patentamt
European Patent Office
Office européen des brevets

(11) **EP 4 179 878 A1**

(12) **EUROPEAN PATENT APPLICATION**

(43) Date of publication:
**17.05.2023 Bulletin 2023/20**

(21) Application number: **22207357.9**

(22) Date of filing: **14.11.2022**

(51) International Patent Classification (IPC):
$A23J\ 1/00^{(2006.01)}$    $A23J\ 1/10^{(2006.01)}$
$A23K\ 10/26^{(2016.01)}$    $A23K\ 20/147^{(2016.01)}$
$A23K\ 20/26^{(2016.01)}$    $A23L\ 13/20^{(2016.01)}$
$A23L\ 13/30^{(2016.01)}$

(52) Cooperative Patent Classification (CPC):
(C-Sets available)
**A23L 13/20; A23J 1/002; A23J 1/10; A23J 3/04;
A23J 3/32; A23K 10/20; A23K 10/26;
A23K 20/147; A23K 20/24; A23K 20/26;
A23L 13/30;** A23V 2002/00      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 PT 2021117574
19.11.2021 PT 2021117591**

(71) Applicant: **Universidade do Minho
4704-553 Braga (PT)**

(72) Inventors:
• **COUTO TEIXEIRA, JOSÉ ANTÓNIO
4710-057 BRAGA (PT)**
• **SOARES MARQUES, BIANCA PATRÍCIA
4710-057 BRAGA (PT)**
• **CORREIA PEREIRA, RICARDO NUNO
4710-057 BRAGA (PT)**
• **RIBEIRO ROCHA SOARES VICENTE, CRISTINA
MARIA
4710-057 BRAGA (PT)**

(74) Representative: **Patentree
Edificio Net
Rua de Salazares, 842
4149-002 Porto (PT)**

(54) **METHOD FOR PROCESSING A PROTEIN-RICH RESIDUE AND USES THEREOF**

(57) The present disclosure relates to a method for processing a protein-rich by-product derived from meat or poultry industry with a minimum insoluble mineral content of 4 % (w/w$_{dry}$), by a hydrothermal treatment under subcritical water/solvent conditions, for obtaining two separated and concentrated valuable fractions: protein and minerals. These fractions are useful as a starting material for the production of feed and food products, and chemical phosphorus compounds, respectively. Feed, food and feed phosphates, medical phosphates, food and feed calcium, or fertilizers comprising the mineral fraction; and food, animal feed, or fertilizer comprising the protein fraction obtainable by the disclosed method are also disclosed.

EP 4 179 878 A1

(52) Cooperative Patent Classification (CPC): (Cont.)

C-Sets
A23V 2002/00, A23V 2300/28, A23V 2250/542

**Description**

**TECHNICAL FIELD**

The present disclosure relates to the valorisation of agro-industrial by-products, in particular, by-products for food and feed processing.

**BACKGROUND**

Meat and bone meal (MBM) is a by-product of the rendering industries made from animal parts that are not suited for human consumption.

Since the Bovine Spongiform Encephalopathy (BSE) epidemic, the use of MBM for animal feed production in Europe was restricted. In order to prevent the use of risk material in cattle feed production, the animal wastes were classified in three categories, according to their risk: category 1 corresponds to high-risk wastes, which includes by-products of animals suspected to be infected with BSE and specific risk materials (such as bovine brain and spinal cord); category 2 corresponds to medium-risk wastes and includes by-products of animals presenting risk of other infections or animals that died in farms, and is therefore also considered of limited application; and category 3 consists in low risk by-products arising from animals considered for human consumption.

MBM is a category 3 by-product and its annual average production in Europe exceeds 3.5 million tons. Some of the MBM produced is used as ingredients for feed and pet food, but the majority is being incinerated or disposed in landfills. Moreover, in Europe, around 50 % of the material that could be used to produce MBM are often collected as category 1 substrates, being incinerated. This leads to a negative environmental impact, and also economic losses for meat industry.

Thus, new processes and treatments that could valorise animal by-products are needed, not only to avoid economic losses in industries, but also to make a full use of protein sources (as a shortage of nutrients, and in particular protein, is expected to occur in the near future), and to avoid environmental issues related with their landfills disposal. Moreover, the market price of rendered products, such as MBM, blood meal and feather meal has been declining since 2014, reinforcing the needed to find innovative ways to valorise these low-value by-products.

MBM is a heterogenous mixture with high protein (crude protein (CP) > 50 % of total dry MBM weight) and mineral (ash content of 10-34 % of total dry MBM weight) contents. Proteins have been used as feedstock to develop value-added products. On the other hand, mineral constituents could also be employed in phosphorous fertilizers production.

Thermally denatured proteins in MBM have very low solubility in water, thus limiting its processability and hindering its valorisation. Hydrolysis is a common treatment employed to improve the solubility and functionality of proteins. Protein hydrolysis procedures usually use chemicals (acid or alkali), enzymes or a combination of both. In recent years, proteins have also been extracted using sub-critical water hydrolysis (SWH).

SWH is a process that uses water in the subcritical state, i.e., water that, despite being at temperatures above its boiling point, remains in the liquid state due to the high pressures applied in the process (100 - 374 °C; 0.1 - 22 MPa). In recent years, the application of SWH to extract and hydrolyse biomolecules from plants, algae and animal and vegetable by-products revealed as a powerful process. In particular, protein hydrolysis under sub-critical conditions has been reported for valorisation of animal wastes, such as fish entrails, offal, poultry waste, silk waste and pig hair.

There are few studies relying on animal by-products valorisation, showing that protein-rich residue derived from meat or poultry industry, MBM, can be valorised by means of protein or minerals recovery.

Document US4473589, by Sawhill et al. (1984), describes a process of protein hydrolysis using residues and waste products as raw materials. In this process the raw materials are hydrolysed to end liquid products containing peptones and smaller polypeptides, by combining alkaline and enzymatic treatments. Products obtained are claimed to be used in feed (e.g.fermentation ingredients) foods, and bacteriological media. Same authors, in document US6030649, used a similar process to treat pre-dried animal meals. This process results from the combination of a hot water wash of meal with alkaline liquification and proteolytic enzyme treatments. At the end of the process MBM digested peptide solution presented 60 % (w/w) of protein and 9 % (w/w) of ash and could be considered for inclusion in animal feeds or edible food products. Despite good outcomes achieved, both inventions considered enzymatic hydrolysis, which is characterized for long processing times, and elevated cost of enzymes.

Nakahashi and Yoshida (2004), described a severe SWH treatment of MBM. In this study, around $4 \times 10^{-4}$ kg of MBM was subjected to SWH using $2 \times 10^{-3}$ Kg of ultrapure water. The reactor was purged with argon and temperature of reaction ranged from 473 K to 563 K (200-290 °C). Reaction time varied from 1 to 20 min. After hydrolysis four phases were generated: oil, fat, aqueous solution and residual solids. The organic acids and amino acids content in the aqueous phase were analysed by HPLC, and it mainly consisted in pyroglutamic acid, acetic acid, lactic acid, glycine, alanine and glutamic acid. Pyroglutamic acid showed the maximum yield among the organic acids identified (0.05 kg/kg dry MBM at 563 K). The yield was constant after the 10 min of reaction. The other organic acids, such us acetic acid and lactic acid also showed constant yields after 10 min of reaction, but values were below 0.02 kg/kg dry MBM. The yields of glycine and alanine were 0.019 kg/kg dry MBM and 0.013 kg/kg dry MBM, respectively, at 533 K and 15 min reaction. The process is much more severe than the one described in the present disclosure, and final products in the liquid fraction consist mainly in monomeric organic acids and amino acids, resulting from extensive thermal hydrolysis and degradation of the protein fraction.

Document DE102008015883A1 discloses the development of phosphorous optimized plant feed material by reacting MBM with orthophosphoric acid in a stirring reactor at temperatures range of 10-100 °C and reaction time of 1-30 s. According to this document, phosphorus optimized feed material presents a water solubility of 80 % and contains a considerable amount of amino acids, which are readily absorbed by the animals.

Document KR20020079321A describes a method of manufacturing a vegetable bio-feedstock from MBM using effective mushroom strains. The production steps comprise (i) preparation of the culture medium containing MBM previously dried to a 50-70 % RH of water; (ii) sterilization of the prepared medium; (iii) cooling and spawn inoculation, in which the medium is cooled to 20-25 °C and mushroom seedlings are inoculated; (iv) culture and ripening, preferably temperature is 20-25 °C and the humidity is 50-70 % RH; (v) dehydration; and (vi) drying, separating foreign matter and pulverizing, producing vegetable bio-feed.

Garcia and Piazza (2014) showed that proteolysis treatment of MBM with trypsin and subtilisin can convert all protein present in MBM to the soluble hydrolysates and that the produced hydrolysates present kaolin flocculant activity. Garcia and Piazza (2014) also showed that partial alkaline hydrolysis or enzymatic hydrolysis with versazyme, alcalase, and flavourzyme of MBM, blood meal and feather meal are effective treatments to produce products with flocculant activity. Essandoh et al. (2017) conducted acid hydrolysis of MBM at 105 °C during 1h, followed by centrifugation of contents and supernatant collection and protein hydrolysates produced also showed flocculant properties.

Document CN110627554A provides a method for the preparation of a MBM organic fertilizer. The process comprises an initial step of mixing materials, where MBM (40-50 % by mass) is mixed with rapeseed cakes (10-15 %) sesame cakes (10-15 %), soybean meal (5-10 %), tobacco slag (20-30 %), composite fermentation strains (0.1-0.2 %) and composite enzymes (0.05-0.1 %). pH is adjusted by adding light-burned magnesium (2-4 %). Then, a decomposing stage where the materials are fully decomposed and fermented is performed. The final step for obtaining the fertilizer comprises airing, sieving the aired materials, extruding, and granulating, drying and cooling. The end-product presents a percentage of organic matter up than 80 %, a percentage of total nutrients $\leq$ 8 % and a water content of 12 %. According to the invention the fertilizer produced meets the requirements of industrial standards.

Document CZ302089B6 discloses a process for producing MBM based fertilizer. The process comprises exothermic reaction of MBM with phosphoric acid, followed by the formation of a solidifying binder system by reaction with a magnesium compound. The resulting organomineral phosphorous-nitrogen fertilizer contains 20-32 % (wt) of phosphoric oxide, 3-8 % (wt) of total nitrogen and 4-15 % (wt) of magnesium oxide

Document WO2019149898A1 concerns the preparation of purified calcium phosphate(s) using ash from calcined animal meal or calcined processed animal protein (such as MBM) as raw material. In this process the mineral ash is dissolved in a solution of hydrochloric acid, which is then filtered to remove the metal phases. After that, a neutralization precipitation step followed by a step of washing and drying (T $\leq$ 60 °C) allows to obtain a very pure hydroxyapatite.

Document PL235540B1 relates to a thermal treatment of MBM, in order to obtain phosphoric acid or calcium phosphates. The method consists in the calcination of a mixture containing MBM and recycled ash using a weight ratio of MBM to ash ranging from 1/0.25 to 1/10. At the end of the process the ash obtained has 17 % of phosphorus content and does not have any heavy metals or organic carbon, making possible its use for the production of chemical phosphorus compounds.

Some of the inventions and studies reported imply long processing time and the use of severe conditions of alkalinity and/or acidity. Thus, new improved and alternative processes to valorise animal by-products are needed as way to minimize the economic loss and environmental burden of their incineration and landfill disposal.

Due to the actual treatment of MBM by-products, which mostly consists in incineration and/or landfill disposal but may also include feed and fertilizers, new alternatives and treatments of such product are being exploited as a way to decrease the industry economic losses and environmental burden-related issues.

MBM has high protein content (CP > 50 % dry w/w) and considerable mineral content. In particular, MBM usually contains 5-6 % (dry w/w) of total phosphorous and up to 2.2 times this value of total calcium. This feedstock is usually explored as a "whole", but easy separation of its fractions can provide both a wider range of applications and/or higher added-value.

Proteins have been used as feedstock for the developing of value-added products as feed and food, flocculant, adhesives, among others. On the other hand, mineral fractions can be used for poultry feed, fertilizer's production and to produce food or medical phosphates. Giving the fact that the phosphorous geological resources are estimated to be exhausted in the next 60-70 years, and that the average production of MBM is 3.5 tons per year in Europe, the valorisation of phosphates contained in MBM is an effective way to respond and minimize the problems related to the rarefaction of geological phosphorous resources.

These facts are disclosed in order to illustrate the technical problem addressed by the present disclosure.

## GENERAL DESCRIPTION

The present disclosure relates to a hydrothermal treatment of a protein-rich by-product, with a significant amount of insoluble mineral, usually due to bone, derived from meat or poultry industry, to produce simultaneously liquid protein-enriched solutions (hydrolysates) and mineral-enriched solids. The hydrolysates are suitable for feed and/or food products and mineral-enriched solids could have a wide range of applications, such as fertilizers, calcium supplements, among others. These end products result from SWH treatment, with or without alkaline additives.

In an embodiment, the protein-rich by-product with insoluble minerals derived from meat and/or poultry industry is selected from meat and bone meal (MBM), poultry meal (PM), feather meal (FM), or other processed animal proteins (PAP) with relevant insoluble minerals, preferably meat and bone meal.

In an embodiment, MBM is submitted to a hydrothermal treatment, specially designed for industrial-scale implementation, with low costs and using poorly concentrated alkaline solutions (or none).

In an embodiment, the disclosed method allows the simultaneous separation of the protein fraction from the mineral fraction present on MBM, giving two high-value end products: protein-enriched hydrolysates with protein content greater than 60 % ($w/w_{dry}$) and ash contents less or equal to 20 % ($w/w_{dry}$); and high pure mineral-enriched solids with ash content higher than 60 % ($w/w_{dry}$) and nitrogen content less than 30 % ($w/w_{dry}$).

In another embodiment, the disclosed method allows the simultaneous separation of the protein fraction from the mineral fraction present on MBM, giving two high-value end products: protein-enriched hydrolysates with protein content greater than 65 % (w/w) and ash contents less or equal to 20 % (w/w); and high pure mineral-enriched solids with ash content higher than 60 % (w/w) and nitrogen content less than 30 % (w/w).

In an embodiment, the two fractions are separated and recovered using a hydrothermal treatment, with small amounts of alkali or just water as solvents. In an embodiment, the protein fraction is thermally solubilized, improving its digestibility through partial hydrolysis, to be incorporated in food or animal feed, while simultaneously promoting the isolation/concentration of the inorganic matter, in the solid fraction, for further potential valorisation. In a further embodiment, a third fraction can be collected by solid-liquid separation of the suspended solids in the liquid fraction, still rich in both mineral and protein.

In an embodiment, the method for processing the protein rich by-product includes the following steps:

- Hydrothermal treatment of a protein-rich by-product with insoluble minerals derived from meat and/or poultry industry (such as MBM), with or without alkali, at temperatures $\geq$ 125, preferably $\geq$ 130 °C, and pressure above the boiling point at the selected temperature to keep water in the sub-critical liquid state (e.g., for 130 °C, pressure should be above 0.27 MPa). In an embodiment, additives such as caustic soda or other hydroxides may be used in the hydrolysis, in a concentration up to 1 M;
- Recovery, separation, and treatment (e.g., concentration/purifying and drying) of end products to its final delivery form.

In an embodiment, the protein fraction is effectively separated from the mineral fraction. The solubility of the protein fraction is increased, with low costs and using low concentration of chemicals.

In an embodiment, other animal-sourced by-products rich in proteins and insoluble minerals, namely other processed animal proteins (PAP), such as food grade MBM, poultry meals, poultry by-product meals and other by-products from meat and poultry industry presenting a suitable insoluble mineral fraction, may also be employed in this method for protein and mineral separation and valorisation.

The present disclosure relates to a method for processing a protein-rich by-product derived from meat and/or poultry industry with minimum insoluble mineral content of 4 % ($w/w_{dry}$) and a protein content higher than 45 % ($w/w_{dry}$), by hydrothermal treatment, wherein the insoluble mineral content is mainly derived from bone tissue, comprising the following steps: hydrolysing the protein-rich by-product with an aqueous liquid solution under sub-critical conditions for obtaining two fractions: a liquid protein fraction and a solid mineral fraction; recovering and separating the liquid protein fraction from the solid mineral fraction; wherein the hydrolysis step occurs at sub-critical conditions with a temperature greater than or equal to 130 °C, to obtain a solid mineral fraction with more than 60 % ($w/w_{dry}$) ash, and a protein fraction with more than 60 % ($w/w_{dry}$) of protein content, wherein at least 30 % ($w/w_{dry}$) of the protein content is in the form of soluble proteins or peptides, preferably and not in the form of single amino acids.

The present disclosure also relates to a method for processing a protein-rich by-product derived from meat and/or poultry industry with a minimum insoluble mineral content of 4 % (w/w) and a protein content higher than 45 % (dry w/w), by hydrothermal treatment, wherein the mineral content is derived from bone tissue, comprising the following steps: hydrolysing the protein-rich by-product with an aqueous liquid solution under sub-critical conditions for obtaining two fractions: a liquid protein fraction and a solid mineral fraction; recovering and separating the liquid protein fraction from the solid mineral fraction; wherein the hydrolysis step occurs at a temperature greater than or equal to 130 °C and at sub-critical conditions, to obtain a solid mineral fraction with more than 60% (w/w) ash, and a protein fraction with more than 60% (w/w) of proteins, wherein at least 15% (w/w) of proteins are proteins with a molecular weight equal or higher than 3000 Da.

For the scope and interpretation of the present disclosure, the term "mainly derived from bone" refers to a content higher than 50%, i.e., at least 50% of the insoluble mineral content of the protein rich by-product is derived from bone; preferably 60%, 70%, 80% or 90% of the insoluble mineral content of the protein rich by-product is derived from bone.

In an embodiment, the hydrolysis step occurs at a temperature greater than or equal to 130 °C and at a pressure above the boiling point of the aqueous solution at the selected temperature.

For the scope and interpretation of the present disclosure the term "sub-critical conditions" relates to temperature and pressure conditions compatible with the existence of liquid aqueous solutions under pressure at temperatures above the usual boiling point at atmospheric pressure of the said aqueous solutions.

In an embodiment, the protein fraction comprises an ash content less or equal to 20 % (w/w$_{dry}$).In a further embodiment, the protein content of the mineral fraction is less than 30 % (w/w$_{dry}$).

In another embodiment, the protein fraction comprises an ash content less or equal to 20 % (w/w). In a further embodiment, the protein content of the mineral fraction is less than 30% (w/w).

In an embodiment the concentration of the protein-rich by-product used as raw material in the hydrolysis step is equal to or lower than 100 g$_{dry weight}$/100 mL of solvent. In a further embodiment, the concentration of the protein-rich by-product in the hydrolysis step ranges from 5 g$_{dry weight}$/100 mL of solvent to 60 g$_{dry weight}$/100 mL of solvent.

In an embodiment, the concentration of the protein-rich by-product used in the hydrolysis step (solids content) is equal or lower than 80 % (dry weight/volume). In another embodiment, the concentration of the protein-rich by-product used in the hydrolysis step (solids content) ranges from 30 % (dry weight/volume) to 70 % .

In an embodiment the protein-rich by-product derived from meat or poultry industry is selected from a list comprising processed animal proteins (PAP), meat and bone meal (MBM), poultry meal (PM), or poultry by-product meal (PB-PM), or mixtures thereof. In a further embodiment the protein-rich by-product derived from meat or poultry industry is feed or food grade. In a yet further embodiment, the protein-rich by-product derived from meat or poultry industry is derived from a single specie (mono-specie) or from different species (multispecies).

In an embodiment the protein-rich by-product is meat and bone meal (MBM).

In an embodiment the aqueous liquid solution comprises up to 1 M of an alkali, preferably 0.01 to 0.1 M of an alkali. In a further embodiment, the aqueous liquid solution comprises an alkali selected from a list comprising: sodium hydroxide, potassium hydroxide, ammonium hydroxide, or mixtures thereof.

In an embodiment, the hydrolysis step occurs at a temperature ranging from 130 °C to 250 °C, preferably 140 °C to 250 °C. In another embodiment the hydrolysis step occurs at a temperature ranging from 130 °C to 200 °C, preferably 150 °C to 200 °C. In another embodiment the hydrolysis step occurs at a temperature ranging from 140 °C to 195 °C.

In an embodiment, the hydrolysis step occurs at a pressure below 22 MPa and above the equilibrium pressure at the boiling point for the selected temperature.

In an embodiment, hydrolysis step occurs at 130 °C and at a pressure greater than 0.27 MPa, or at 150 °C and at a pressure greater than 0.48 MPa, or at 200 °C and at a pressure greater than 1.56 MPa.

In an embodiment, the disclosed method further comprises a step of concentrating and purifying the liquid protein fraction and the solid mineral fraction, preferably by centrifugation, washing with water, filtration, or combinations thereof.

In an embodiment, the disclosed method further comprises a step of drying the obtained protein fraction and/or the mineral fraction. The drying step can be achieved by different means known in the state of the art such as spray-drying, lyophilization, or oven drying.

An aspect of the present disclosure relates to feed (including but not limited to poultry feed), food and feed phosphates, medical phosphates, food and feed calcium, or fertilizers comprising a mineral fraction obtainable by the disclosed method.

Another aspect of the present disclosure relates to food, animal feed, including but not limited to pet food and fish food, or fertilizers comprising a protein fraction obtainable by the disclosed method.

## BRIEF DESCRIPTION OF THE DRAWINGS

The following figures provide preferred embodiments for illustrating the disclosure and should not be seen as limiting the scope of invention.

**Figure 1:** Embodiment of mineral quantification by Inductively Coupled Plasma on solid fraction (A) and hydrolysates (B) after hydrothermal treatment, when considering a ratio of 5 % (dry weight/volume) of MBM and 0.1 M of NaOH.

**Figure 2:** Embodiment of thermal gravimetric analysis of MBM.

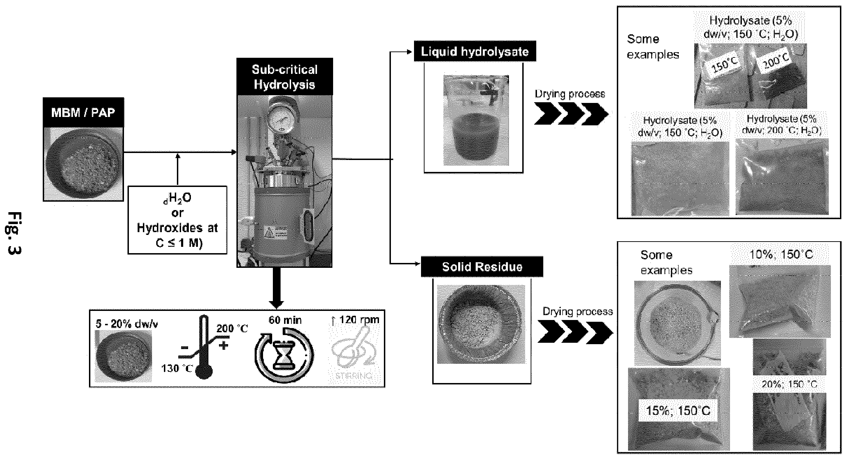

**Figure** 3: Schematic representation of the hydrothermal treatment, the obtention of 2 phases after the treatment and the look of some final products after separation and drying.

**Figure 4:** Embodiment of a gel permeation chromatogram with the molecular weight profile of a protein fraction obtained at 150 °C, with NaOH 0.1 M and considering a ratio of 3 $g_{dry\ weight}$ MBM/ 100 mL solvent. Standards: t=10.9 min - Mw=14.3 kDa; t=10.0 min - Mw=37.4 kDa; t=9.7 min - 66 kDa.

## DETAILED DESCRIPTION

The present disclosure relates to a method for processing a protein-rich by-product derived from meat or poultry industry by hydrothermal treatment, for obtaining two separated and concentrated valuable fractions: protein and minerals. These fractions are useful as a starting material e.g., for the production of feed and food products and chemical phosphorus compounds, respectively.

In an embodiment, to valorise the mineral part of MBM, the organic matter of MBM was separated by a hydrothermal method that uses SWH. The organic matter was solubilized to the liquid fraction, producing high value protein-enriched fraction (CP > 60 % w/w) that are suitable for feed (including, but not limited to, pet food and aquafeed) and food applications. In opposition to hydrolysates rich in amino acids, which increase the astringency of food products, less hydrolyzed protein-fractions, or protein-enriched hydrolysates, may have a minor impact on the final taste of food products.

The remaining insoluble solids were whitish in colour and mostly consisting in ash (greater than 60 % dry weight basis), making possible its further use as mineral source for food, feed and fertilizers, or preferably to be further processed for phosphorous and /or calcium sources for food and feed.

In an embodiment, the process for the production of protein-enriched hydrolysates and insoluble ash-enriched solids included the following steps: (i) hydrothermal treatment with or without alkali additives; (ii) separation of liquid and solid fractions and (iii) concentration/purifying and drying of materials.

For the scope and interpretation of the present disclosure "hydrothermal treatment" is defined as a treatment using sub-critical liquid water (SCW) or an alkali aqueous solution under subcritical conditions. SCW is water maintained in the liquid state at temperatures higher that its boiling point (100 °C to 374 °C) due the high pressures applied in the process (0.1 - 22 MPa). Besides the usual advantages associated with high temperatures, including increased kinetics and solubility, and decreased surface tension, when water is in the subcritical state it acquires unique properties: the decrease in the dielectric constant enables its use as solvent in the recovery of more hydrophobic matters, and the increase in the water ionic product, increases the amount of $OH^-$ and $H^+$ ions available and consequently its potential to act as an acid- or base-like catalyst in the hydrolysis of different types of biomass. In an embodiment, the "hydrothermal treatment" disclosed in the present invention is conducted at temperature range from 125 to 250 °C, preferably 130 °C to 200 °C, more preferably 140 °C to 195 °C, preferably under agitation, at pressures above the water vapor equilibrium pressure at the operational temperature and below the critical point.

For the scope and interpretation of the present disclosure "alkaline additive" is defined as an aqueous alkaline solution, preferably caustic soda at concentrations up to 1 M, but may include other hydroxides, such as potassium hydroxide.

The term "concentration/purifying" relates to processes conducted to improve the concentration and quality of end products. Depending on the end-product, it can include centrifugation, washing with water, filtration, evaporation and/or drying. These processes are widely known by those skilled in the art and are commonly used in the industry.

In this context, the invention relates to the simultaneous separation and recovery of the different fractions (protein and minerals) from processed animal proteins (PAP) with insoluble minerals, such as MBM, by the hydrothermal treatment with SCW, with or without alkali as additive.

The examples presented bellow illustrate the disclosed method. The reactor vessel used in these examples consisted in pressurized reactor Parr4523, made of 316L stainless steel. The pressure inside the reactor was slightly above the pressure of water vapor at the testing temperature (0.5 MPa for the experiments at 150 °C; 1.6 MPa for 200 °C; 4.1 MPa for 250 °C). The reaction occurred during 60 min under stirring.

In an embodiment, MBM was hydrolysed (step i) as follows:

(a) MBM initial concentration in reactor vessel ranged from 5 % (dry weight/volume), i.e., 5 $g_{dry\ weight}$/100 mL of solvent to 20 % (dry weight/volume), i.e., 20 $g_{dry\ weight}$/100 mL of solvent;

(b) Tests were made using only water as solvent;

(c) In order to increase MBM solubility, and therefore protein solubility, tests included the use of NaOH (0.01 to 0.1 M) as an additive. For the lowest temperature tested (150 °C), the addition of NaOH increased the MBM solubilization by 1.4 times.

(d) When considering concentrations of MBM equal or higher than 10 % (dry weight/volume), i.e., 10 $g_{dry\ weight}$/100 mL of solvent, the hydrothermal treatment needed additives, such as caustic soda (sodium hydroxide) at 0.05 M, to increase protein solubility and achieve a desired protein mineral separation.

Separation of fractions was achieved after the hydrothermal treatment by decanting the obtained liquid fractions and manually collecting the insoluble solids. In order to purify and/or concentrate the obtained fractions, the third step consisted in centrifuging the liquid fraction at 5000 rpm for 60 min, washing the insoluble solids with distilled water and drying the materials. Liquid fractions were dried by lyophilization, after neutralization. Insoluble solids were dried in oven at temperatures ranging from 50 °C to 60 °C.

However, the scope of the present invention is not limited by the following examples, and ordinary changes (e.g reactor, time of reaction, additives, agitation, concentration of PAP (e.g., MBM) and/or other similar raw materials, drying process) are possible within the scope of the technical idea of the present invention.

Example 1

The example shows the effect of the disclosed hydrothermal treatment employed in MBM on solubilization and in the amount of protein and ash obtained in end products, when considering a ratio of 10 % (dry weight/volume), i.e., 10 $g_{dry\ weight}$/100 mL of solvent of MBM.

Experimental procedure:

The processing of MBM was carried out as follows: 50 g of MBM were added to the reactor vessel followed by 0.5 L of caustic soda at 0.05 M. The reaction occurred at 150 °C in a pressurized reactor (Parr, 4523, USA), at a pressure between 0.4 to 0.5 MPa, preferably of 0.5 MPa, for 60 min with a stirring rate of 180 rpm. At the end of the treatment, two end products were obtained: the liquid fraction (I) and the insoluble solid (II). The liquid fraction (I) was decanted and subjected to a centrifugation at 5000 rpm and 4 °C during 60 min. The supernatant was collected and frozen for further lyophilization. The insoluble solid product (II) was collected and washed with 0.2 L of distilled water and allowed to dry in a 60 °C oven (Termaks, USA).

The solubilization percentage was determined as follows:

$$\% \ solubilization = \frac{MBM \ in \ reactor \ vessel(g; dry \ weight \,) - Insoluble \ mass \ (g; dry \ weight \,)}{MBM \ in \ reactor \ vessel(g; dry \ weight \,)} \times 100$$

Where the insoluble mass was the mass of insoluble solid collected from the vessel plus the mass of the pellets resulting from the centrifugation process.

The two end products obtained, along with the raw material, were analysed regarding their protein content (Kjeldahl method) and ash content (incineration with gravimetric determination; AOAC International 923.03 method, 1990 or ISO 2171:2007, with minor modifications as suggested by ASTM Standard Method E1755-01, 2003, using only 1 g of sample instead of the 3-5 g proposed in the original AOAC method 923.03). Distinct methods are available in the state of art to quantify the protein content. In an embodiment, the protein quantification was performed by the Kjeldahl method. Briefly 0.5 g of each sample was added to a digestion flask along with 10 mL of sulfuric acid 96% and selenium tablets. Digestion was performed using meat AOAC program from the Digestor™ auto 2508 (Foss Analytic) and the distillation and titration steps were conducted by automatic Kjeltec™ 8400 (Foss Analytic) unit. The results are expressed as percentage of crude protein (CP), which were obtained by multiplying the nitrogen content (%) measured in Kjeltec™ 8400 (Foss Analytic) unit with the factor 6.25. With both analyses (protein and ash), it was possible to assess the composition in protein and ashes content in all fractions involved, the total initial amount of protein and ash available in process, and to quantify the amount of protein and ash that was solubilized into the liquid fraction and/or retained in the solid fraction.

The results in Table 1 and 2 show that the hydrothermal treatment applied can effectively separate the protein fraction from the mineral fraction, with minimal lost, allowing the obtention of (I) protein-rich hydrolysates with low minerals and (II) a solid fraction which is mostly minerals and with low organic composition.

Table 1. Protein and ash contents of hydrolysates and insoluble solids after hydrothermal treatment, when considering a ratio of 10 % (dry weight/volume), i.e., 10 $g_{dry\ weight}$/100 mL of solvent of MBM.

|  | Hydrolysate | Insoluble solid |
|---|---|---|
| **Protein** (%, **w/w**) | 85.86 ± 1.64 % | 3.58 ± 0.22 % |
| Ash (%, w/w) | 7.72 ± 0.30 % | 78.02 ± 1.03 % |

**Table** 2. Balances of the hydrothermal process when considering a ratio of 10 % (dry weight/volume), i.e., 10 $g_{dry\ weight}$/ 100 mL of solvent of MBM.

| Parameter | Mean |
|---|---|
| **MBM solubilization** (%) | 59.83 % |
| **Protein solubilized** (%, **w/w**) | 90.44 % |
| Ash solubilized (%, w/w) | 14.52 % |
| Protein retained in insoluble solid (%, w/w) | 2.08 % |
| Ash isolated from insoluble solid (%, w/w) | 78.27 % |

**Example** 2

The example shows the effect of the disclosed hydrothermal treatment employed in MBM on solubilization and in the amount of protein and ash in end products, when considering a ratio of 20 % (dry weight/volume), i.e., 20 $g_{dry\ weight}$/100 mL of solvent of MBM.

Experimental procedure

100 g (dry weight) of MBM were added to the reactor vessel followed by the solvent (0.05 M caustic soda, 0.5 L). The reaction and procedure to obtain the end products occurred as mentioned in Example 1.

The results on Table 3 and 4 show that it is viable to increase the ratio of solids at least until 20 % (dry weight/volume), i.e., 20 $g_{dry\ weight}$/100 mL of solvent, and that the contents in ash and protein in the end products confirm the separation into two fractions: in this case, the ash content in the solid fraction was 71 % (w/w), preferably 71 % (w/w$_{dry}$), and the protein content in the liquid fraction was 89 % (w/w), preferably 89 % (w/w$_{dry}$), corresponding to 88 % of protein content that was solubilized from the initial matrix into the liquid fraction and 79 % of the initial minerals that were retained in the solid fraction.

Table 3. Protein and ash contents of end products of hydrolysis, when considering a ratio of 20 % (dry weight/volume), i.e., 20 $g_{dry\ weight}$/100 mL of solvent of MBM.

|  | **Hydrolysate** | **Insoluble solid** |
|---|---|---|
| **Protein (%, w/w$_{dry}$)** | 89.67 ± 0.09 % | 9.72 ± 0.34 % |
| **Ash (%, w/w$_{dry}$)** | 6.69 ± 0.29 % | 71.33 ± 1.60 % |

**Table 4.** Balances of the hydrothermal treatment of 20 % (dry weight/volume) MBM

| **Parameter** | **Mean** |
|---|---|
| **MBM solubilization (%)** | 55.71 % |
| **Protein solubilized (%, w/w)** | 88.63 % |
| Ash **solubilized (%, w/w)** | 12.49 % |
| **Protein retained in insoluble solid (%, w/w)** | 5.94 % |
| **Ash isolated in insoluble solid (%, w/w)** | 79.76 % |

**Example 3**

The example shows the effect of the disclosed hydrothermal treatment employed in MBM on solubilization and in the amount of protein and ash in end products of hydrolysis, when considering a ratio of 15 % (dry weight/volume), i.e., $g_{dry\ weight}$/100 mL of solvent of MBM.

Experimental procedure

75 g (dry weight) of MBM were added to the reactor vessel followed by the solvent (caustic soda at 0.05 M, 0.5 L). The reaction and procedure to obtain the end products occurred as mentioned in Example 1.

The results on Table 5 and 6 show that the hydrothermal method employed can effectively separate the protein fraction from the mineral fraction when considering a ratio of 15 % (dry weight/volume), i.e., 15 $g_{dry\ weight}$/100 mL of solvent MBM.

**Table 5.** Protein and ash contents of hydrolysates and insoluble solids after hydrothermal treatment, when considering a ratio of 15 % (dry weight/volume), i.e., 15 $g_{dry\ weight}$/100 mL of solvent of MBM

|  | Hydrolysate | Insoluble solid |
|---|---|---|
| Protein (%, $w/w_{dry}$) | 85.73 $\pm$ 2.75 % | 11.66 $\pm$ 2.70 % |
| Ash (%, $w/w_{dry}$) | 7.17 $\pm$ 0.25 % | 75.05 $\pm$ 0.69 % |

**Table 6.** Balances of the hydrothermal process when considering a ratio of 15 % (dry weight/volume), i.e., 15 $g_{dry\ weight}$/100 mL of solvent of MBM.

| Parameter | Mean |
|---|---|
| MBM solubilization (%) | 52.89 % |
| Protein solubilized (%, w/w) | 81.24 % |
| Ash solubilized (%, w/w) | 12.31 % |
| Protein retained in insoluble solid (%, w/w) | 7.63 % |
| Ash isolated from insoluble solid (%, w/w) | 87.41 % |

**Example 4**

The example shows the effect of the disclosed hydrothermal treatment employed in MBM on solubilization and in the amount of protein and ash in end products of hydrolysis, when considering a ratio of 5 % (dry weight/volume), i.e., 5 $g_{dry\ weight}$/100 mL of solvent of MBM, different additive's concentration (0 $\leq$ NaOH $\leq$ 0.1 M) and different temperatures (150 °C $\leq$ T $\leq$ 250 °C).

Experimental procedure

25 g of MBM were treated as described in Example 1. Three temperatures were tested using 0.5 L of caustic soda at 0.1 M: 150 °C, 200 °C and 250 °C using a stirring rate of 160 rpm. For temperatures of 150 °C and 200 °C the hydrothermal method was also tested using distilled water and caustic soda at 0.05 M. For 150 °C caustic soda at 0.01 M was also tested.

At 150 °C results show that sodium hydroxide is needed for improving protein solubilization, at least at a concentration of 0.05 M, decreasing the protein amount in insoluble solid from 25.31 $\pm$ 0.7 % (w/w) to 3.44 $\pm$ 2.13 % (w/w), preferably 25.31 $\pm$ 0.7 % ($w/w_{dry}$) to 3.44 $\pm$ 2.13 % ($w/w_{dry}$). Increasing temperature to higher values, allowed decreasing the amount of alkali needed or even discard its use. In fact, at 200 °C the hydrothermal treatment of 5 % (dry weight/volume), i.e., 5 $g_{dry\ weight}$/100 mL of solvent using only distilled water showed to be efficient, allowing to obtain an amount of protein in hydrolysate of 91.8 % (w/w) against only 7.1 % (w/w) in insoluble solid. Moreover, at this condition, the insoluble solid shows 72 % (w/w) of ash and hydrolysate only presents 6.2 % (w/w) of ash content.

**Example 5**

The example shows the mineral content (mg/L) of the final products when considering a hydrothermal treatment using a ratio of 5 % (dry weight/volume), i.e., 5 $g_{dry\ weight}$/100 mL of solvent of MBM and NaOH at 0.1 M.

Experimental Procedure

Minerals in end products were quantified by Inductively Coupled Plasma (ICP). Briefly, 0.4 g of each product were digested in an acid solution containing $HNO_3$ 65 % (v/v) and $H_2O_2$ 35 % (v/v) in a proportion of 8:1. Digestion was undertaken in a Berghof microwave digestion system according to the program described by the supplier manual. For each mineral, a calibration standard curve was performed.

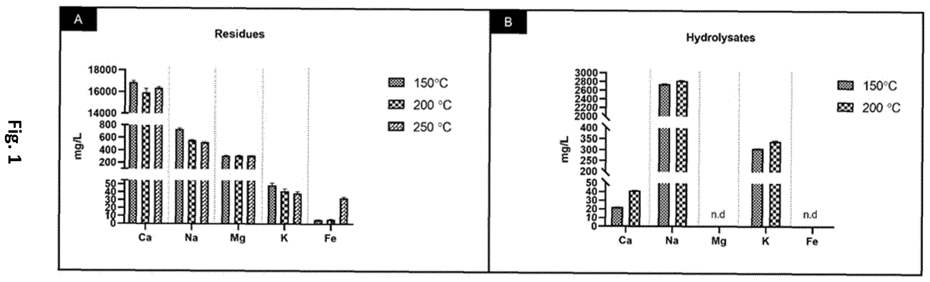

The results on Figure 1A and 1B show that the hydrothermal method employed can effectively isolate the mineral fraction on the insoluble solid fraction, remaining only substantial amounts of soluble sodium and (some minor) potassium salts in the hydrolysates (the first from the added sodium hydroxide). In particular, calcium (Ca), the most abundant insoluble mineral in MBM (5869 ± 47 mg/L), was isolated in great amounts on solid fraction being detected only 20 to 50 mg/L in hydrolysates, thus corroborating the effectiveness of separation and the purity of solid fraction.

**Example 6**

The example shows the composition and thermal gravimetrical behaviour of the tested MBM.

Experimental Procedure

Thermal gravimetric analyses were performed in a PerkinElmer TGA 4000 (PerkinElmer, Massachusetts, EUA). Samples were heated from 25 °C to 800 °C at a heating rate of 10 °C $min^{-1}$ under a nitrogen atmosphere.

In an embodiment, the composition of the MBM was determined as described for the hydrolysates in example 1 and is presented in Table 7.

**Table 7.** MBM composition used in these examples

| Parameter | Mean |
|---|---|
| Ash (w/w$_{dry}$) | 29.26 % |
| Protein (% w/w$_{dry}$) | 53.19 ± 0.09 % |
| Humidity (% w/w) | 1.71 ± 0.01 % |
| Phosphorous (total, %) | 5.00 ± 1.00 % |
| Calcium (mg/L) | 5869.40 mg/L |

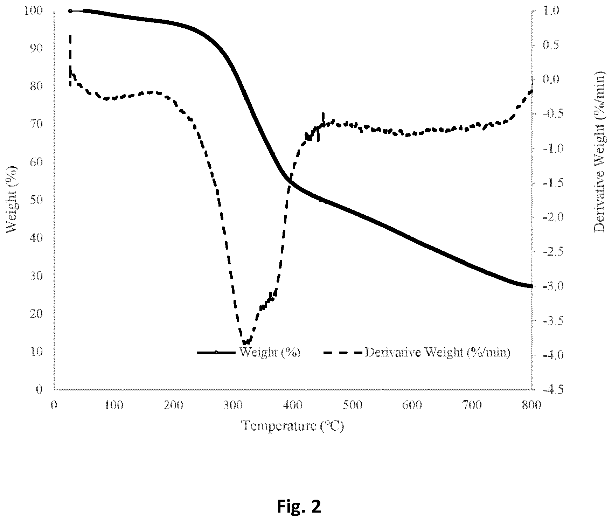

The results on Figure 2 show that MBM has a sharp region of weight loss starting at ca. 200 °C, indicating thermal degradation of the MBM components, probably mainly of the proteins, present in higher amounts. This confirms that, up to 200 °C, extensive degradation is not likely to occur. Even so, although the onset temperature is slightly above 200 °C, not significant degradation of the sample occurred up to 250 °C.

**Example 7**

This example shows the protein/peptide profile of a protein fraction obtained after processing the MBM using the disclosed method at 150 °C, with NaOH 0.1 M and considering a ratio of 3 $g_{dry\ weight}$/100 mL of solvent of MBM.

Experimental procedure

The molecular weight distribution of the protein fraction was evaluated by gel permeation chromatography (GPC). The analysis was made in a PolySep-GFC-P Linear column (300 × 7.8 mm, Phenomenex®, USA) using a UV detector. Ultrapure water was used as eluent, at a flow rate of 0.8 mL $min^{-1}$.

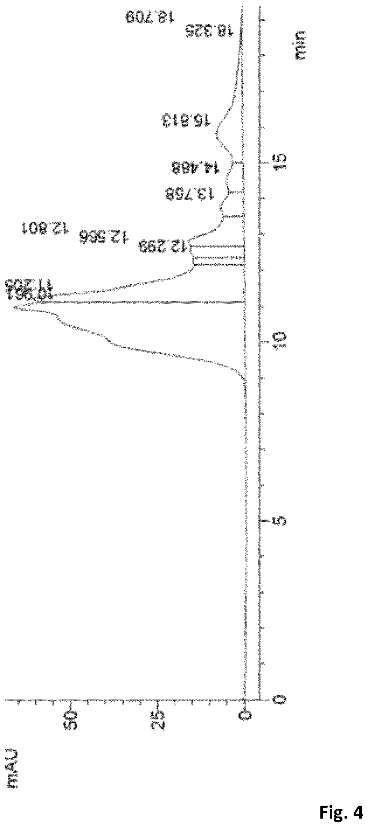

The gel permeation chromatogram (Figure 4) shows the molecular weight profile obtained. A pronounced peak is observed starting at 9 min (corresponding to 70 kDa, approximately) until a maximum intensity at 10.96 min (ca. 14 kDa), confirming the presence of an important fraction of proteins and high molecular weight peptides.

**Example 8**

The example shows the effect of the hydrothermal treatment employed in a mixture of fresh chicken meat and bone (CMB) solubilization and in the amount of protein and ash in end products of hydrolysis, when considering a ratio of 5 % (dry weight/volume), i.e., 5 $g_{dry\ weight}$/100 mL of solvent of CMB. The initial amount of ashes in the mixture was 12 % (dry weight). The mixture was previously cooked at 100 °C for 20 min and grinded.

Experimental procedure

25 g (dry weight) of CMB were added to the reactor vessel followed by the solvent (caustic soda at 0.05 M, 0.5 L). The reaction and procedure to obtain the end products occurred as mentioned in Example 1.
The results (Table 8) indicated that 76.4 $\pm$ 0.2 % of solubilization was achieved and 81.7 $\pm$ 6.1 % of the ashes from the CMB remained in the insoluble fraction. The final amount of ashes in the insoluble fraction was 63.8 $\pm$ 1.7 % and in the soluble part was 13.7 $\pm$ 1.2 %. In the case of the soluble part, 8.6 % of ashes can be ascribed to the added NaOH, being only 5.1 % from the CMB. Therefore, the hydrothermal method employed can also effectively separate the mineral fraction when considering a mixture of chicken meat and bone.

**Table 8.** Balances of the hydrothermal process when considering a ratio of 5 % (dry weight/volume), i.e., 5 $g_{dry\ weight}$/ 100 mL of solvent of CMB.

| Parameter | Mean |
|---|---|
| **CMB solubilization (%)** | 76.4$\pm$ 0.2 % |
| **CMB solubilization not considering insoluble ashes (%, w/w)** | 85.1$\pm$0.9 % |
| **Ash solubilized (%, w/w)** | 8.3$\pm$1.1 % |
| **Ash remaining in the insoluble solid (%, w/w)** | 81.7$\pm$6.1% |

The term "comprising" whenever used in this document is intended to indicate the presence of stated features, integers, steps, components, but not to preclude the presence or addition of one or more other features, integers, steps, components or groups thereof.
The disclosure should not be seen in any way restricted to the embodiments described and a person with ordinary skill in the art will foresee many possibilities to modifications thereof. The above described embodiments are combinable.
The following claims further set out particular embodiments of the disclosure.

**Claims**

1. A method for processing a protein-rich by-product derived from meat and/or poultry industry with a minimum insoluble mineral content of 4 % (w/w$_{dry}$) and a protein content higher than 45 % (w/w$_{dry}$), by hydrothermal treatment, wherein the insoluble mineral content is mainly derived from bone tissue, comprising the following steps:

   hydrolysing the protein-rich by-product with an aqueous liquid solution under sub-critical conditions for obtaining two fractions: a liquid protein fraction and a solid mineral fraction;
   recovering and separating the liquid protein fraction from the solid mineral fraction;

   wherein the hydrolysis step occurs at sub-critical conditions with a temperature greater than or equal to 130 °C, to obtain a solid mineral fraction with more than 60 % (w/w$_{dry}$) ash, and a protein fraction with more than 60 % (w/w$_{dry}$) of protein content, wherein at least 30 % (w/w$_{dry}$) of the protein content is in the form of soluble proteins or peptides.

2. The method according to any of the previous claims wherein the protein fraction comprises an ash content less or equal to 20 % (w/w$_{dry}$).

3. The method according to any of the previous claims wherein the protein content of the mineral fraction is less than 30 % (w/w$_{dry}$).

4. The method according to any of the previous claims wherein the concentration of the protein-rich by-product in the hydrolysis step is equal or lower than 100 $g_{dry\ weight}$/100 mL of solvent

5. The method according to any of the previous claims wherein the concentration of the protein-rich by-product in the hydrolysis step ranges from 5 $g_{dry\ weight}$/100 mL of solvent to 60 $g_{dry\ weight}$/100 mL of solvent.

6. The method according to any of the previous claims wherein the protein-rich by-product derived from meat or poultry industry is selected from a list comprising processed animal protein, meat and bone meal, poultry meal, poultry by-product meal, or mixtures thereof.

7. The method according to any of the previous claims wherein the protein-rich by-product is meat and bone meal.

8. The method according to any of the previous claims wherein the aqueous liquid solution comprises up to 1 M of an alkali, preferably 0.01 to 0.1 M of an alkali, preferably wherein the alkali is selected from a list comprising: sodium hydroxide, potassium hydroxide, ammonium hydroxide, or mixtures thereof.

9. The method according to any of the previous claims wherein the hydrolysis step occurs at a temperature ranging from 130 °C to 250 °C, preferably 130 °C to 200 °C, more preferably 140 °C to 195 °C.

10. The method according to any of the previous claims wherein the hydrolysis step occurs at 130 °C and at a pressure greater than 0.27 MPa, or at 150 °C and at a pressure greater than 0.48 MPa, or at 200 °C and at a pressure greater than 1.56 MPa.

11. The method according to any of the previous claims further comprising a step of concentrating and purifying the liquid protein fraction and the solid mineral fraction.

12. The method according to any of the previous claims wherein the liquid protein fraction and the solid mineral fraction are concentrated and purified, preferably by centrifugation, washing with water, filtration, or combinations thereof.

13. The method according to any of the previous claims further comprising a step of drying the protein fraction and/or the mineral fraction.

14. Feed, food and feed phosphates, medical phosphates, food and feed calcium, or fertilizers comprising a mineral fraction obtainable by the method described in any of the previous claims.

15. Food, animal feed, or fertilizer comprising a protein fraction obtainable by the method described in any of the previous claims.

**Fig. 1**

**Fig. 2**

Fig. 3

Fig. 4

Europäisches
Patentamt

European
Patent Office

Office européen
des brevets

# EUROPEAN SEARCH REPORT

Application Number

EP 22 20 7357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEKONNEN TIZAZU H. ET AL: "Subcritical hydrolysis and characterization of waste proteinaceous biomass for value added applications", JOURNAL OF CHEMICAL TECHNOLOGY AND BIOTECHNOLOGY, vol. 90, no. 3, 22 February 2014 (2014-02-22), pages 476-483, XP93019284, Hoboken, USA ISSN: 0268-2575, DOI: 10.1002/jctb.4333 | 1-4,6-9, 13,15 | INV. A23J1/00 A23J1/10 A23K10/26 A23K20/147 A23K20/26 A23L13/20 A23L13/30 |
| Y | * the whole document * | 8 | |
| A | | 5,10-12, 14 | |
| X | JP 2007 117793 A (UNIV OSAKA PREFECTURE; MITSUBISHI NAGASAKI MACH CO) 17 May 2007 (2007-05-17) | 1-7,9-15 | |
| Y | * paragraph [0001] – paragraph [0027]; figure 1 * | 8 | |
| Y | MEKONNEN TIZAZU H ET AL: "Recovery and characterization of proteinacious material recovered from thermal and alkaline hydrolyzed specified risk materials", PROCESS BIOCHEMISTRY, ELSEVIER LTD, GB, vol. 48, no. 5, 29 April 2013 (2013-04-29) , pages 885-892, XP028562932, ISSN: 1359-5113, DOI: 10.1016/J.PROCBIO.2013.04.015 | 8 | |
| A | * 2.1.Materials, 2.2.Hydrolysis of rendering material * | 1-7,9-15 | |

-----

-----

-----

-/--

**TECHNICAL FIELDS SEARCHED (IPC)**

A23J
A22C
C11C
A23K
A23L

The present search report has been drawn up for all claims

| Place of search | Date of completion of the search | Examiner |
|---|---|---|
| Munich | 1 March 2023 | Alevisopoulos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 20 7357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PESTI G M ET AL: "Nutritive Value of Poultry By-Product Meal. 1. Metabolizable Energy Values as Influenced by Method of Determination and Level of Substitution", POULTRY SCIENCE, vol. 65, 1 January 1986 (1986-01-01), pages 2258-2267, XP93020208, * p.2258: Introduction; p.2259, col.1: "Poultry by-product meal samples"; table 1 * | 1-15 | |

TECHNICAL FIELDS
SEARCHED        (IPC)

The present search report has been drawn up for all claims

| Place of search | Date of completion of the search | Examiner |
|---|---|---|
| Munich | 1 March 2023 | Alevisopoulos, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 7357

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2023

| Patent document cited in search report | Publication date | Patent family member(s) | Publication date |
|---|---|---|---|
| JP 2007117793 A | 17-05-2007 | JP 4156621 B2<br>JP 2007117793 A | 24-09-2008<br>17-05-2007 |

For more details about this annex : see Official Journal of the European Patent Office, No. 12/82

EPO FORM P0459

**EP 4 179 878 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4473589 A, Sawhill
- US 6030649 A
- DE 102008015883 A1
- KR 20020079321 A
- CN 110627554 A
- CZ 302089 B6
- WO 2019149898 A1
- PL 235540 B1